(19) Europäisches Patentamt
European Patent Office
Office européen des brevets

(11) **EP 0 960 009 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(51) Int Cl.⁷: **B29B 7/76**
**// C08J3/00, B01F5/04**

(21) Anmeldenummer: **98908051.0**

(22) Anmeldetag: **04.02.1998**

(86) Internationale Anmeldenummer:
**PCT/EP98/00587**

(87) Internationale Veröffentlichungsnummer:
**WO 98/035804 (20.08.1998 Gazette 1998/33)**

(54) **VERFAHREN UND MISCHKOPF ZUM HERSTELLEN EINES REAKTIONSGEMISCHES AUS EINEM ISOCYANAT UND EINER POLYOLFORMULIERUNG**

METHOD AND MIXING HEAD FOR PRODUCING A REACTION MIXTURE FROM AN ISOCYANATE AND A HIGHER-VISCOUS POLYOL FORMULATION

PROCEDE DE PREPARATION D'UN MELANGE REACTIONNEL COMPRENANT UN ISOCYANATE ET UNE FORMULATION POLYOL ET TETE MELANGEUSE PERMETTANT DE METTRE LEDIT PROCEDE EN OEUVRE

(84) Benannte Vertragsstaaten:
**AT BE CH DE DK ES FI FR GB GR IE IT LI NL PT SE**

(30) Priorität: **17.02.1997 DE 19706030**
**30.09.1997 DE 19743187**

(43) Veröffentlichungstag der Anmeldung:
**01.12.1999 Patentblatt 1999/48**

(73) Patentinhaber: **BAYER AG**
**51368 Leverkusen (DE)**

(72) Erfinder:
• **SCHULTE, Klaus**
**D-51429 Bergisch Gladbach (DE)**
• **KRIPPL, Kurt**
**D-40789 Monheim (DE)**
• **FRIEDERICHS, Wolfgang**
**D-50933 Köln (DE)**
• **KÜNZEL, Uwe**
**D-51377 Leverkusen (DE)**
• **WEBER, Hans-Ulrich**
**D-51381 Leverkusen (DE)**

(56) Entgegenhaltungen:
**EP-A- 0 091 050     EP-A- 0 447 883**
**EP-A- 0 529 651     EP-A- 0 554 719**
**DE-A- 2 314 459     DE-A- 2 945 818**
**GB-A- 2 275 439     US-A- 4 426 348**
**US-A- 5 270 013**

• **PATENT ABSTRACTS OF JAPAN vol. 012, no. 222 (M-712), 24.Juni 1988 & JP 63 021109 A (NIPPON PLAST CO LTD), 28.Januar 1988,**
• **PATENT ABSTRACTS OF JAPAN vol. 004, no. 187 (M-048), 23.Dezember 1980 & JP 55 133938 A (ASAHI GLASS CO LTD;OTHERS: 01), 18.Oktober 1980,**

**Beschreibung**

Die Erfindung betrifft ein Verfahren zum rührwerkslosen Herstellen eines Polyurethan-bildenden Reaktionsgemisches aus einem Isocyanat und einer Polyolformulierung, wobei diese beiden Komponenten einer Mischzone zugeführt und darin miteinander vermischt werden und wobei mindestens eine der Komponenten eine Viskosität von oberhalb 3000 mPa·s, vorzugsweise oberhalb 5000 mPa·s, aufweist.

Neue Einsatzgebiete erfordern die Verarbeitung höherviskoser Polyolformulierungen. Der Einsatz höherviskoser Komponenten bietet viele Vorteile. In der Regel nimmt die Viskosität von Polyetherpolyolen und insbesondere von Polyesterpolyolen mit steigender Funktionalität deutlich zu. Um hohe Vernetzungsgrade und damit ein besseres mechanisches Eigenschaftsniveau zu erreichen, ist der Einsatz größerer Mengen bzw. Anteile hochfunktioneller Polyolkomponenten wünschenswert.

Als hochviskose Komponente findet auch die Isocyanat-Komponente in Form eines Prepolymers Anwendung.

Dabei bereitet die einwandfreie Vermischung in einer rührwerkslosen, selbstreinigenden Mischkammer immer noch in dem Maße Schwierigkeiten, wie die Viskosität solcher Komponenten steigt. Im Kunststoff-Handbuch, Band 7, "Polyurethane" (Carl Hanser Verlag München 1993), wird auf Seite 175, letzter Absatz, angeführt: "War früher bei 1500 mPa·s die Grenze der Mischbarkeit erreicht, sind heute Viskositäten oberhalb 2000 mPa·s nach der Injektionsmethode beherrschbar". Faktisch ist es jedoch bis heute nicht gelungen, Reaktionskomponenten mit Viskositäten oberhalb 3000 mP·s nach der Gegenstrom-Hochdruck-Injektionsmethode zu verarbeiten. Der resultierende Schaumstoff weist Schlieren auf und die physikalischen Werte fallen rapide ab. Man mußte dann mit Rührwerksmischköpfen arbeiten.

Es war auch bekannt (Kunststoff-Handbuch, Seite 125), die Viskosität mit erhöhter Verarbeitungstemperatur auf 2000 bis 3000 mPa·s zu senken. Durch die erhöhte Komponententemperatur nimmt aber die Reaktivität der Systeme derart zu, daß der Schäumprozeß nicht mehr kontrolliert werden kann.

Aufgabe der vorliegenden Erfindung ist es, ein Verfahren und einen Mischkopf zu schaffen, womit ein Reaktionsgemisch der eingangs genannten Art ohne Verwendung eines Rührwerkes herstellbar ist, welches zu einem Produkt hoher Qualität ausreagiert.

Gelöst wird diese Aufgabe dadurch, daß eine eine Viskosität von mindestens 3000 mPa·s aufweisende Polyolformulierung unter Niederdruck in die Mischzone eingespeist wird und daß mindestens zwei Ströme aus niedrigviskosen Komponenten (Isocyanat und gegebenenfalls niedrigviskoses Polyol) unter Hochdruck in den Strom der hochviskosen Polyolformulierung injiziert werden.

Überraschenderweise wird hiermit eine gute Vermischung höherviskoser Komponen-ten erzielt. Die Erfindung macht sich zunutze, daß durch Aufteilung der niedrigvisko-sen Komponente in zwei oder mehr Teilströme deren Energie zwar verlagert, aber insgesamt erhöht wird.

Vorzugsweise ist die Querschnittsfläche des Stromes der Polyolformulierung 10- bis 100mal größer als die Summe der Querschnittsflächen der Isocyanatströme.

Gegebenenfalls im Zusammenwirken mit vorzugsweisen Verarbeitungsdrücken von 50 bis 300 bar für Isocyanat und unterhalb 20 bar für die Polyolformulierung werden gute Resultate erzielt. Bevorzugt ist ein Druck zwischen 70 und 250 bar, insbesondere bevorzugt 100 bis 200 bar.

Vorzugsweise werden die Teilströme der Isocyanatkomponente im Querstrom injiziert.

Hierzu sei gesagt, daß bei nicht zu großer Abweichung vom Querstromeintrag auch noch relativ gute Ergebnisse erzielbar sind.

Vorteilhaft ist auch, den Injektionsstrahl nicht auf die Mittelachse der Mischzone zu richten, denn eine zumindest angenähert tangentiale Eintragsrichtung sorgt durch zusätzliche Verwirbelung für einen guten Vermischungsgrad. Im Normalfall wird man die Eintragsstellen gleichmäßig über den Umfang der Mischzone verteilen und gegebenenfalls nur die niedrigviskose Komponente stirnseitig zuführen.

Beim klassischen Gegenstrom-Injektionsprinzip mit Komponentenviskositäten < 2000 mPa·s wird mit folgender Energieaufteilung gearbeitet:

$$(m_{Poly} \; x \; p_{Poly}) + (m_{Iso} \; x \; p_{Iso}) = E$$

Bei einem Austrag von 4 kg/min Polyol (Viskosität 4000 mPa·s) und 6 kg/min Isocyanat (Viskosität 50 mPa·s), also einem Gesamtaustrag von 10 kg/min bei Injektionsdrücken von 100 bar, ergibt sich folgende Energicaufteilung:

$$(4 \; x \; 100) + (6 \; x \; 100)$$

Energie des Polyols 400 + Energie des Isocyanats 600 = <u>1000</u>

Beim neuen Verfahren hingegen wird das Polyol mit 10 bar zugeführt und das Isocyanat in zwei gegeneinander gerichteten Teilströmen mit 180 bar im Querstrom eingedüst:

$$(m_{Poly} \; x \; p_{Poly}) + [(m_{Iso}/2 \; x \; p_{Iso}) + (m_{Iso}/2 \; x \; p_{Iso})] = E$$

$$4 \; x \; 10 + (6/2 \; x \; 180) + (6/2 \; x \; 180)$$

$$\text{Energie des Polyols } 40 + \text{Energie des Isocyanats } 1080 = \underline{1120}$$

Gemäß einer alternativen Durchführungsform des neuen Verfahrens werden alle Ströme in der gleichen Ebene in die Mischzone eingebracht.

Es ist auch möglich, von der Polyolformulierung nur den höherviskosen Anteil unter Niederdruck zuzuführen und davon getrennt niedrigviskose Anteile ebenso wie das Isocyanat in den Strom des höherviskosen Anteils unter Hochdruck zu injizieren.

Hier folgendes Beispiel: Verarbeitet werden 4 kg/min Polyol, wovon 2/3 hochviskos und 1/3 niedrigviskos sind. Der hochviskose Anteil wird mit einem Druck von 10 bar senkrecht in die Mischzone eingetragen. Der niedrigviskose Anteil sowie 6 kg/min Isocyanat werden in insgesamt drei um 120° versetzten Teilströmen unter 150 bar quer injiziert. Hierzu die Energierechnung, wobei "Poly H" hochviskoses Polyol und "Poly N" niedrigviskoses Polyol bedeuten:

$$[(1/3 m_{PolyH} \; x \; p_{Poly}) + (2/3 m_{PolyN} \; x \; p_{Poly})] + [(m_{Iso}/2 \; x \; p_{Iso}) + (m_{Iso}/2 \; x \; p_{Iso})] = E$$

$$(1,33 \; x \; 10) + (2,66 \; x \; 150) + (6/2 \; x \; 150) + (6/2 \; x \; 150)$$

$$\text{Energie des Polyols } 413 + \text{Energie des Isocyanats } 900 = \underline{1313}$$

Bei Aufteilung der Polyolformulierung in hoch- und niedrigviskose Anteile kann auch der hochviskose Anteil senkrecht in die Mischkammer eingebracht werden, während der niedrigviskose Anteil in einem Strom und die gesamte Isocyanatmenge in einem anderen Strom gegeneinander injiziert werden:

$$[(1/3 m_{PolyH} \; x \; p_{Poly}) + (2/3 m_{PolyN} \; x \; p_{Poly})] + [(m_{Iso} \; x \; p_{Iso}) = E$$

$$(1,33 \; x \; 10) + (2,66 \; x \; 150) + (6 \; x \; 150)$$

$$\text{Energie des Polyols } 413 + \text{Energie des Isocyanats } 900 = \underline{1313}$$

Selbstverständlich können sowohl das Isocyanat und/oder das niedrigviskose Polyol auch in mehreren Teilströmen injiziert werden.

Zur Durchführung des neuen Verfahrens eignet sich bevorzugt ein rührwerksloser Mischkopf, bestehend aus einer Mischkammer mit Einlaßöffnungen für die Komponenten.

Das Neue ist zu sehen in einer Einlaßöffnung für die höherviskose Polyolformulierung und mindestens zwei Einlaßöffnungen für niedrigviskose Komponenten (Isocyanat und gegebenenfalls niedrigviskoses Polyol), wobei die Querschnittsfläche der Einlaßöffnung für die höherviskose Polyolformulierung 10- bis 100mal größer ist als die Summe der Querschnittsflächen der Einlaßöffnungen für die niedrigviskose(n) Komponente(n).

Derartige Mischköpfe sind selbstreinigend und erlauben vom Prinzip her - je nach ihrer Steuerungsmöglichkeit - einen kontinuierlichen Betrieb, beispielsweise für nachgeordnete Bandanlagen, oder auch einen Schußbetrieb zum Füllen von Formwerkzeugen oder sonstigen auszufüllenden Hohlräumen.

Die Erfindung erlaubt die Herstellung von Reaktionsmischungen unter Einsatz von Polyolkomponenten mit Viskositäten von oberhalb 3000 mPa·s, insbesondere zwischen 10.000 und 50.000 mPa·s.

Eine Limitierung für die Viskosität der Polyolkomponente ergibt sich aufgrund der erforderlichen Fördermittel. Als Fördermittel bis 100.000 mPa·s geeignet sind Zahnradpumpen, Schraubenspindelpumpen oder auch Schneckenmaschinen.

Die Erfindung wird nachfolgend anhand der beigefügten Figuren näher erläutert:

Fig. 1a und 1b      zeigen einen erfindungsgemäßen Mischkopf mit einem als Breitschlitzdüse gestalteten Auslauf.

Fig. 2      zeigt einen erfindungsgemäßen Mischkopf mit einem als Löffel- bzw. Zungendüse gestalteten Auslaß.

Fig. 3a und 3b      zeigen einen erfindungsgemäßen Mischkopf für Schußbetrieb.

Fig. 4a, 4b und 4c      zeigen eine alternative Ausführungsform eines erfindungsgemäßen Mischkopfes für Schußbetrieb.

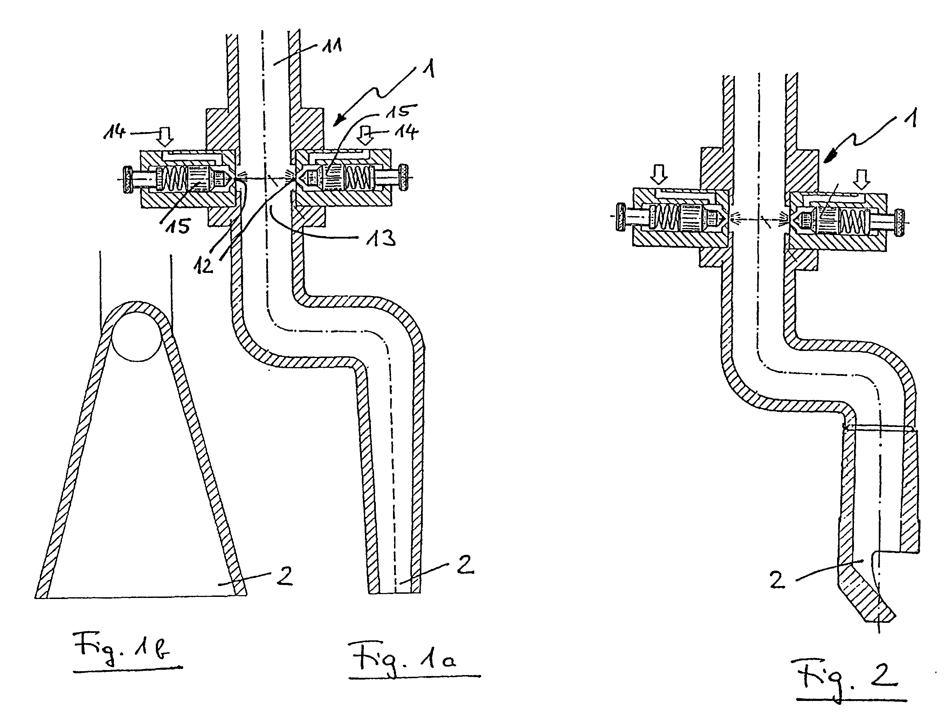

Der erfindungsgemäße Mischkopf 1 gemäß Fig. 1a enthält eine Zufuhrleitung 11 für das hochviskose Polyol sowie Einleitöffnungen 12 für das Isocyanat. Die Einleitöffnungen 12 weisen gegen vorgespannte Federn bewegliche Verschlußkegel 15 auf, die sich bei der Zuleitung von Isocyanat (Pfeil 14) mit dem erforderlichen Druck öffnen. Die geometrisch nicht scharf definierte Mischzone 13 ist in Form eines einfachen Durchflußrohres gestaltet, in das die Injektionsdüsen 12 für das Isocyanat münden. Die Mischzone 13 enthält keinerlei turbulenzerzeugende Einbauten. Vorzugsweise sind die Injektionsdüsen 12 für das Isocyanat nicht in Richtung auf die Achse der Mischzone 13 ausgerichtet, sondern derart in der Ebene senkrecht zur Achse verdreht, daß dem hochviskosen Polyolstrom durch die Injektion des Isocyanats eine Rotationsbewegung in der Mischzone 13 zur Unterstützung der Vermischung aufgeprägt wird. Der Auslauf 2 des Mischkopfes 1 ist in Form einer Breitschlitzdüse ausgestaltet. Fig. 1b zeigt einen Schnitt senkrecht zur Zeichnungsebene der Fig. 1a durch den Mischkopfauslauf 2.

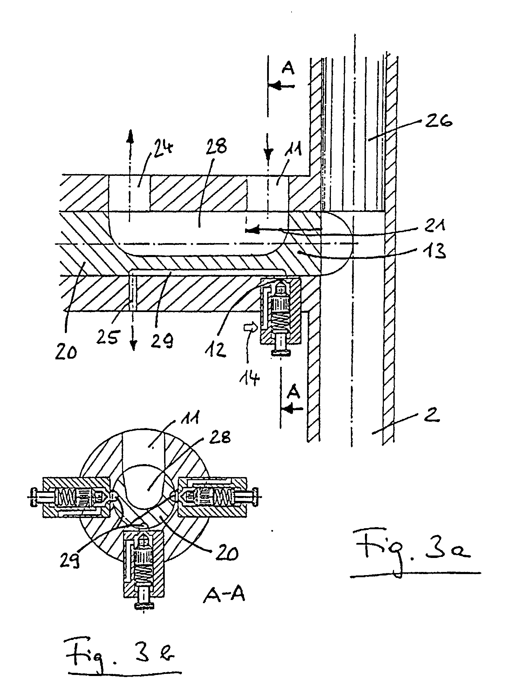

Fig. 2 zeigt einen Mischkopf 1 wie in Fig. 1a, wobei jedoch der Auslauf 2 als Zungendüse ausgebildet ist.

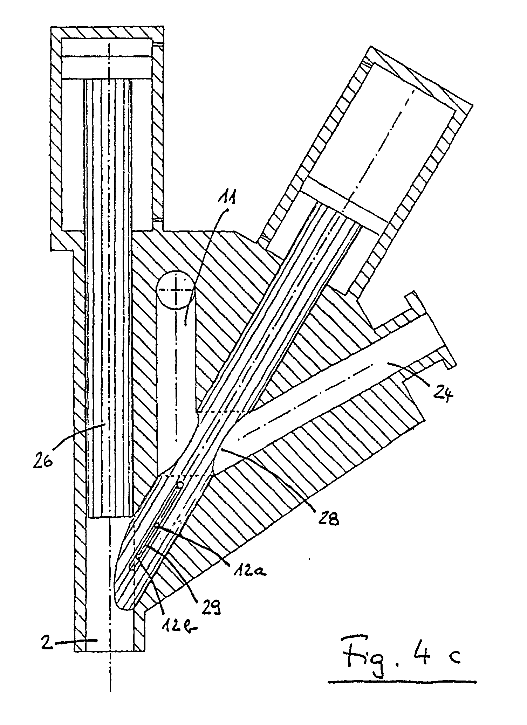

Der Mischkopf 1 gemäß Fig. 3a ist für den intermittierenden Schußbetrieb zur Herstellung von Formschaumteilen geeignet. Der Mischkopf weist einen Verschlußkolben 20 auf, der in Achsenrichtung (Pfeil 21) hydraulisch beweglich ist. Zur Füllung der Form wird der Verschlußkolben 20 (wie durch Pfeil 21 angedeutet) zurückgefahren, so daß der Zulauf 11 für das hochviskose Polyol und die Injektionsdüse 12 für das Isocyanat für den Eintritt in die Mischzone 13 freigegeben werden. Aus der Mischzone 13 gelangt die Mischung in das Auslaufrohr 2, durch das die Mischung in die Form gefüllt wird. Nach Beendigung der Formfüllung wird der Verschlußkolben 20 in die dargestellte Position zurückgefahren, wobei die Zuläufe 11 und 12 zur Mischzone 13 abgesperrt werden. Gleichzeitig werden die Zuläufe 11 und 12 über Nuten 28 und 29 des Verschlußkolbens 20 mit den Rezirkulationsleitungen 24 und 25 verbunden, über die das hochviskose Polyol und das Isocyanat in die jeweiligen Vorratsbehälter zurückgefördert werden. Der Rezirkulationsstrom wird während der Schußunterbrechung, wie in der Technik der Polyurethan-Herstellung üblich, aufrechterhalten. Der Mischkopf weist ferner einen hydraulisch betriebenen Reinigungskolben 26 auf, der nach Schußende, nachdem der Verschlußkolben 20 in Verschlußstellung gefahren ist, die im Auslaufrohr 2 verbliebene Mischung aus dem Auslaufrohr 2 auswirft. Fig. 3b zeigt einen Schnitt A-A durch die Darstellung der Fig. 3a. In der beispielhaften Darstellung sind drei Injektionsdüsen für die Isocyanat-Einleitung vorgesehen. Im übrigen sind Variationen der konstruktiven Ausführung des Mischkopfes möglich, die der Fachmann ohne weiteres aus Becker/Braun, Kunststoff-Handbuch, Band 7, Polyurethane, S. 177-182 (1993) ableiten kann. Erfindungsgemäß wesentlich ist der im Vergleich zu den Isocyanat-Einleitöffnungen große Querschnitt der Zuleitung für das hochviskose Polyol mit entsprechend großen Querschnitten für die Rezirkulationsleitungen, so daß das hochviskose Polyol im wesentlichen druckfrei gefördert werden kann.

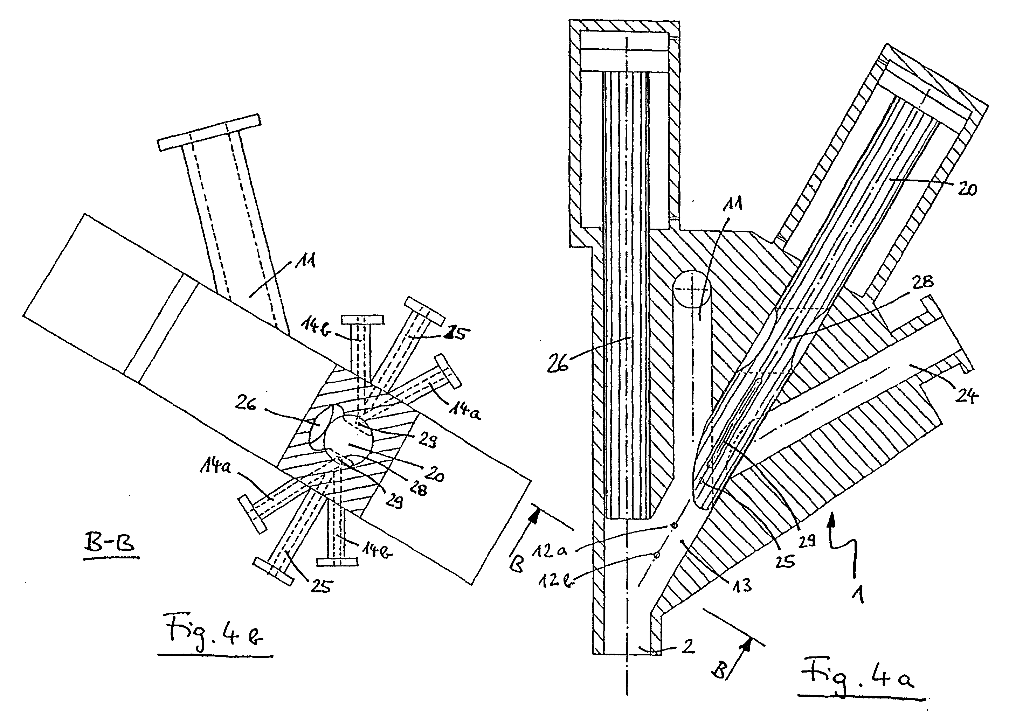

Fig. 4a zeigt eine alternative Ausführungsform für den erfindungsgemäßen Mischkopf für intermittierenden Schußbetrieb, wobei die Umlenkwinkel für das hochviskose Polyol klein gehalten werden. Gleiche Bezugszeichen bezeichnen gleiche Elemente wie in Fig. 3a. Fig. 4b zeigt einen Schnitt B-B durch die Darstellung der Fig. 4a. Fig. 4c zeigt eine Darstellung gemäß Fig. 4a, wobei der Verschlußkolben 20 in Verschlußstellung gefahren ist. Der über Zuleitung 11 zugeführte hochviskose Polyolstrom erfährt bei der Einleitung in die Mischzone 13 lediglich eine Umlenkung von 20 bis 35°. Die Einleitung des Isocyanats (vier paarweise gegenüberliegende Einleitöffnungen 12a und 12b) erfolgt quer zum Polyolstrom. Dabei sind die Isocyanat-Zuleitungen 14a und 14b paarweise derart versetzt, daß der Polyolstrom in den Einleitebenen gegenläufig in Rotation versetzt wird. Die Rezirkulation des Isocyanats nach Schußende erfolgt über Nuten 29 des Verschlußkolbens 20. Die Rezirkulation des hochviskosen Polyols erfolgt durch eine Bohrung 28 durch den Verschlußkolben 20, die in Verschlußstellung die Verbindung zur Rezirkulationsleitung 24 herstellt.

# EP 0 960 009 B1

## Patentansprüche

1. Verfahren zum rührwerkslosen Herstellen eines Reaktionsgemisches aus einem Isocyanat und einer Polyolformulierung, wobei das Isocyanat und die Polyolformulierung einer Mischzone zugeführt und darin miteinander vermischt werden, **dadurch gekennzeichnet, daß** die Polyoformulierung eine Viskosität von mindestens 3000 mPa·s aufweisend und unter Niederdruck in die Mischzone eingespeist wird und daß mindestens zwei Ströme aus dem niedrigviskosen Isocyanat und gegebenfalls niedrigriskosen Polyol unter Hochdruck in den Strom der hochviskosen Polyolformulierung injiziert werden.

2. Verfahren nach Anspruch 1, **dadurch gekennzeichnet, daß** die Querschnittsfläche des Stromes der hochviskosen Polyolformulierung 10- bis 100mal größer ist als die Summe der Querschnittsflächen der Hochdruckströme.

3. Verfahren nach Anspruch 1 oder 2, **dadurch gekennzeichnet, daß** die niedrigviskosen Isocyanatshisme unter einem Druck von 50 bis 250 bar in den hochviskosen strom der Polyolformulierung injiziert werden, welcher einen Druck unter 20 bar aufweist.

4. Verfahren nach Anspruch 1, 2 oder 3, **dadurch gekennzeichnet, daß** die Teilströme im Querstrom injiziert werden.

5. Verfahren nach Anspruch 1, 2 oder 3, **dadurch gekennzeichnet, daß** alle Ströme in der gleichen Ebene der Mischzone eingebracht werden.

## Claims

1. A process for producing a reaction mixture from an isocyanate and a polyol formulation without a stirring apparatus, wherein the isocyanate and the polyol formulation are fed to a mixing zone and are mixed with one another therein, **characterised in that** the polyol formulation has a viscosity of at least 3000 mPa·s and is fed into the mixing zone at low pressure and that at least two streams of the low-viscosity isocyanate and optionally low-viscosity polyol are injected at high pressure into the stream of the high-viscosity polyol formulation.

2. A process according to claim 1, **characterised in that** the cross-sectional area of the stream of the high-viscosity polyol formulation is 10 to 100 times greater than the sum of the cross-sectional areas of the high-pressure streams.

3. A process according to claim 1 or 2, **characterised in that** the low-viscosity isocyanate streams are injected at a pressure of 50 to 250 bar into the high-viscosity stream of the polyol formulation, which has a pressure of below 20 bar.

4. A process according to claim 1, 2 or 3, **characterised in that** the sub-streams are injected in a cross-flow.

5. A process according to claim 1, 2 or 3, **characterised in that** all the streams are introduced in the same plane of the mixing zone.

## Revendications

1. Procédé de fabrication sans agitateur d'un mélange réactionnel comprenant un isocyanate et une formulation polyol, l'isocyanate et la formulation polyol étant amenés dans une zone de mélange et y étant mélangés, **caractérisé en ce que** la formulation polyol présentant une viscosité d'au moins 3000 mPas est introduite à basse pression dans la zone de mélange et **en ce qu'**au moins deux flux de l'isocyanate de faible viscosité et le cas échéant du polyol de faible viscosité sont injectés sous haute pression dans le flux de la formulation polyol de viscosité élevée.

2. Procédé suivant la revendication 1, **caractérisé en ce que** la section transversale du flux de la formulation polyol de viscosité élevée est 10 à 100 fois plus grande que la somme des sections transversales des flux à haute pression.

3. Procédé suivant la revendication 1 ou 2, **caractérisé en ce que** les flux d'isocyanate de faible viscosité sont injectés sous une pression de 50 à 250 bars dans le flux de viscosité élevée de la formulation polyol, qui présente une pression inférieure à 20 bars.

4. Procédé suivant la revendication 1, 2 ou 3, **caractérisé en ce que** les flux partiels sont injectés sous forme d'un flux transversal.

5. Procédé suivant la revendication 1, 2 ou 3, **caractérisé en ce que** tous les flux sont introduits dans le même plan de la zone de mélange.

Fig. 2

Fig. 1a

Fig. 1b

Fig. 3a

Fig. 3b

A-A

Fig. 4 c

Fig. 4a

Fig. 4b

B-B